# EUROPEAN PATENT SPECIFICATION

(11) **EP 3 860 908 B1**
(45) Date of publication and mention of the grant of the patent: **15.11.2023**
(21) Application number: 19778533.0
(22) Date of filing: 01.10.2019
(51) Int. Cl.: B63B 49/00, G05D 1/02

(54) **SYSTEM AND METHOD FOR ASSISTING DOCKING OF A VESSEL**
SYSTEM UND VERFAHREN ZUR UNTERSTÜTZUNG DES ANDOCKENS EINES SCHIFFES
SYSTÈME ET PROCÉDÉ D'AIDE À L'AMARRAGE D'UN NAVIRE

(30) Priority: 01.10.2018 EP 18198017; 01.10.2018 US 201862739363 P
(43) Date of publication of application: 11.08.2021
(73) Proprietor: Kongsberg Defence & Aerospace AS, 3601 Kongsberg (NO)
(72) Inventor: OVERREIN, Øyvind, 2010 Strømmen (NO); MORTENSEN, Ivar, 1177 Oslo (NO); SKAAREN-FYSTRO, Paal, 0588 Oslo (NO); ALMAAS, Vegard, 0175 Oslo (NO); PAULSEN, Kristin, 2007 Kjeller (NO)
(74) Representative: Onsagers AS
(86) International application number: PCT/EP2019/076568
(87) International publication number: WO 2020/070114

(56) References cited:
- EP-A2- 2 878 528
- WO-A1-2017/168234

## Description

### Introduction

The present invention comprises a system and a method of assisting in docking a vessel.

This is accomplished in that at least one sensor and processing unit located on the vessel detects relative 3D position between the vessel and distinct points at a dock location and its surrounding area.

### Background

Docking operations of vessels may damage both the vessel and/or dock if a captain is not accurate enough. For the last stage of a docking operation, it is normally required, for example for boats, assistance from ropes and bumpers/buoys. Dangerous weather conditions such as wind, stream and darkness increase the risk associated with the docking operation. Then, experienced captains and deck crew are required to assist. It is challenging to develop techniques for providing assistance during docking so that the number of deck crews and ropes can be reduced to a minimum. There are many different types of docking assistants widely known to professionals. In document EP2878528 a similar docking operation is disclosed.

US 7,561,886 B1 (Gonring) granted June 14, 2009 describes a method where the position of a maritime vessel can be determined relative to a stationary object, such as a dock. Two position sensors are mounted on the maritime vessel and a microprocessor on board the vessel calculates different distances and angular relations to a stationary object, such as a dock. Variable dimensions and angular relations allow a complete determination of the location and bearing of a maritime vessel relative to the dock. This information may then be used by a maneuvering program to allow the vessel to add a position approximately equal to the dock location.

US 7,389,735 B2 (Kaji) granted June 24, 2008 discloses a device for assistance during docking of maritime vessel comprising a distance meter measuring the distance between the maritime vessel and at least three measuring points defined around a destination dock, a configuration evaluation unit evaluating the configuration of the destination dock based on distances between the maritime vessel and the least three measuring points, and a dock assessment unit which, based on the outcome of the evaluation, assesses whether the candidate dock is suitable for docking the maritime vessel.

US 8,622,778 B1 (Maxwell Tyers), granted January 7, 2014, describes a system for avoiding ship collision and, in particular, an automatic docking system consisting of a multitude of sensors that detect the distance between dock and vessel, where the distance information provides feedback to computer processors controlling the engines which drives the vessel sideways toward the dock at an appropriate speed, and stops when the preferred distance from the dock is achieved and maintains this distance.

Image processing tools that may be used in a docking operation are described, for example, in the publications:
Bay, H., A. Ess, T. Tuytelaars, and L. Van Gool. "SURF: Speeded Up Robust Features. "Computer Vision and Image Understanding (CVIU)", Vol. 110, No. 3, pp. 346-359, 2008.
Lowe, David G. "Distinctive Image Features from Scale-Invariant Keypoints", International Journal of Computer Vision. Volume 60, Number 2, pp. 91-110.
Muja, M., and D. G. Lowe. "Fast Matching of Binary Features", Conference on Computer and Robot Vision. CRV, 2012.

Wikipedia (https://en.wikipedia.org/wiki/Visual_odometry) describes, for example, visual odometry and so-called egomotion as two relevant imaging techniques. Visual odometry is a method for determining position and bearing of a vessel by analyzing images from associated cameras mounted on a vessel. Egomotion is the 3D motion of a camera in an environment. Within computer vision, egomotion refers to estimating the camera's motion relative to a rigid scene. Using a stereometric camera helps to reduce errors and additionally provides depth and scaling information.

The above solutions describe sensor packages with associated signal processing which always monitor the point to be docked. Distinct 3D positioned points of the dock location are produced with known algorithms based on, for example, template matching coupled with odometry and egomotion, and where the actual docking operation can be performed automatically. Such a system has high complexity with many advanced components and hence high cost.

In a market with many players and fierce competition, it is therefore in many cases desirable to reduce the complexity and cost by using the smallest number of sensors. However, this may cause the sensor package to no longer follow or track the points to be docked at throughout the docking operation, especially during the final phase.

The present invention may, by using a relatively simple sensor and processing solution, utilize relative 3D position between distinct points from the dock location found in the sensor data tracked in the early phase of the docking operation and distinct surrounding points found in the sensor data in a final phase of a docking operation. In this manner, a docking operation can be performed safely, even though the points from the dock location cannot be found and tracked in the sensor data in the final phase of the docking operation.

It is this feature of the solution that allows existing complex sensor systems, consisting of many components, to be simplified into an inexpensive solution that includes a small set of components, and in many cases only one sensor, to perform safe assisted docking of a vessel.

The invention describes a solution to a problem that does not occur for similar known solutions, because complex sensor systems with many components will provide adequate monitoring and coverage of the dock location throughout the entire docking operation.

The present invention also combines, in a new way, the mentioned elements template matching, egomotion and odometry within the subject field of image processing with the elements relative positioning and targeting within the subject field cybernetics.

### Brief Description of the Invention

The present invention comprises a system and method for assisting in docking a vessel.

The system according to the invention is defined in claim 1.

Additional features of the system are defined in the dependent claims 2-10.

The method according to the present invention is defined in claim 11.

Additional features of the method are defined in dependent claims 12-26.

The present invention may, by using a relatively simple sensor and processing solution, utilize relative 3D position between distinct points from a dock location found in sensor data and followed in the early phase of the docking operation and distinct surrounding points found in the sensor data in a final phase of a docking operation. In this manner, a docking operation can be performed safely, even though the points from the dock location cannot be found and followed in the sensor data in the final phase of the docking operation.

### Detailed description of the invention

The invention will now be further described with reference to figures wherein:
Figure 1a illustrates a vessel with a sensor in the early phase of a docking operation;
Figure 1b illustrates a vessel with sensor in a late phase of a docking operation;
Figure 2 shows an overview of the invention's operations in one embodiment, and
Figure 3 shows an overview of an embodiment of the system of structure and organization of the operations according to the invention.

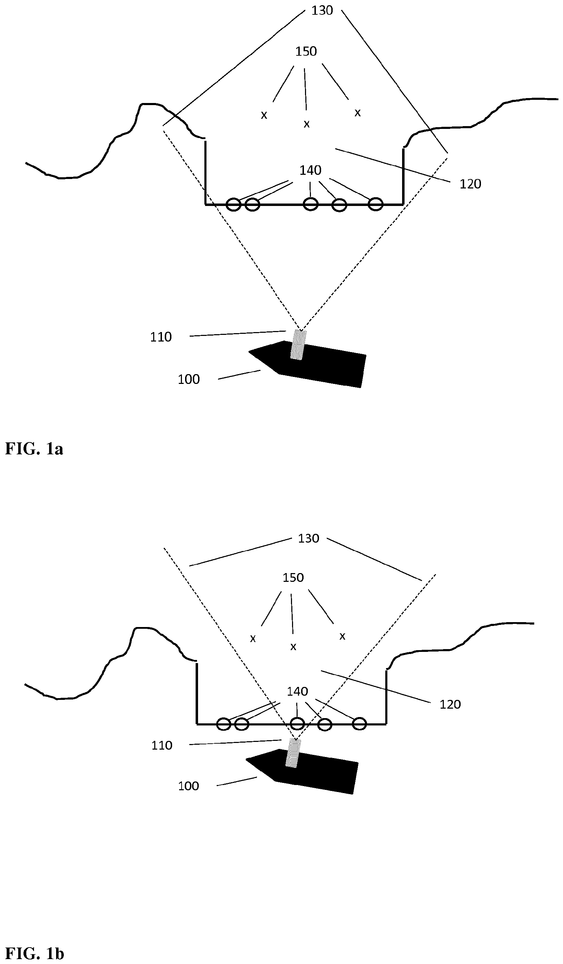

Figure 1a illustrates a vessel 100 with a sensor 110 operating within a sector 130 in an early phase of a docking operation where distinct points 140 at the dock location and distinct points 150 of surrounding area 120 are within sector 130. It is then possible to find and follow distinct 3D positioned points 140, 150 in sensor data from both dock location and surrounding area in area 120 covering both dock docking and surrounding area. The area 120 has no defined limitations.

In the general case, a dock location can be anything from a dock to a structure or area of another vessel to be docked.

Surrounding area 120 can generally range from port/wharf structures to surrounding surface area with structures on another vessel to be docked.

Figure 1b illustrates a vessel 100 with a sensor 110 operating within a sector 130 in the final phase of the docking operation. Because the vessel has begun to approach the dock location, only one of the points 140 is within sector 130 where sensor 110 operates.

For some applications, it may suffice to track only one point at the dock location, for example when a gangway is to be docked from a vessel. However, this usually is not sufficient to dock safely, especially when a vessel is to dock with its broadside, and perhaps also with its front and/or rear part to a dock location. If an accurate docking operation is not performed, it may in some cases cause damage to the vessel and dock.

The distinct 3D positioned points 150 in the surrounding area 120 are always within sector 130 which sensor 110 operates within. These are the points that the present invention relates the distinct points 140 of the dock location to.

The points 140 are detected and tracked in the early phase of the docking operation. They are then kept during the entire docking operation. Thus, the final phase of the docking operation can be completed in a safe manner by means of the point 140 at the dock location, even if only one of the points 140 in this case can be found in data from the sensor 110.

In some cases, in the final phase of a docking operation, obstacles on a vessel 100 or around a dock location may block sector 130 that sensor 110 operates within. This may cause that none of the tracked points 140 on the dock location can be updated using data from sensor 110. However, by the method according to the invention, the vessel can still dock safely.

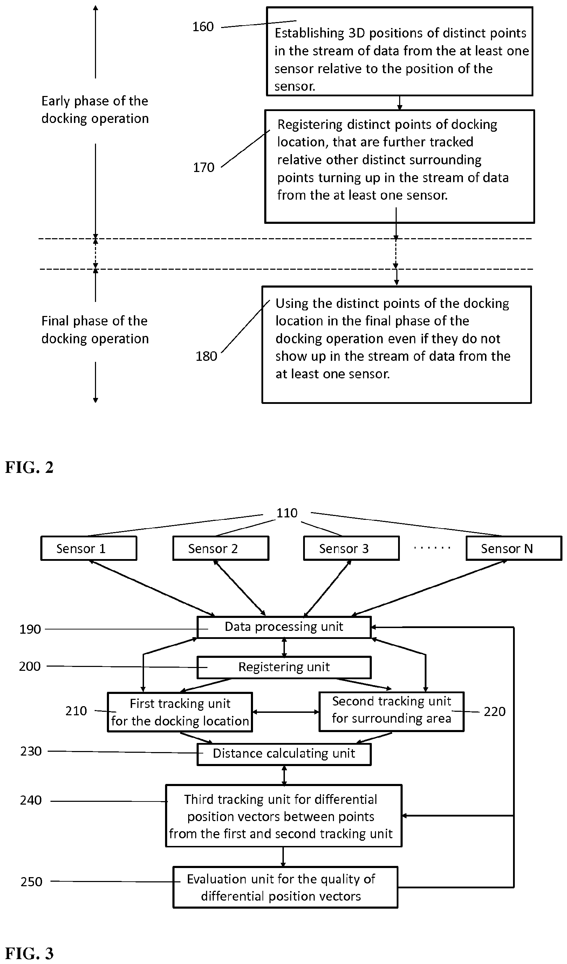

Figure 2 shows an overview, of one embodiment of the invention, of tasks or operations that the invention can perform to process data from sensors. The overview comprises three operations 160, 170 and 180 which are placed beneath each other with arrows between them pointing downwards to illustrate the order of processing operations in time.

In operation 160, techniques are performed for producing distinct points in the flow of data from the at least one sensor relative to the sensor's own position. In one embodiment, basic and well-known processing can be used to establish 3D positions of distinct points in data from the sensors 110.

In the following description of the present invention, a camera is used as an example of a sensor 110 for establishing distinct points in the field of view of sensor 110. The field of view of the sensor means the area a sensor can detect and generate data from. This area then corresponds to the "pictures" that a sensor generates. A person skilled in the art will understand different types of sensors can be used for this. Examples are described in more detail below.

The distinct points are processed by so-called template matching by picking out small parts of a first image that correlates with the next pictures. If there is high correlation, a distinct point is established based on the location of the template. Existing methods such as egomotion and odometry are then used on the distinct points in the pictures to produce distinct 3D positioned points.

In operation 170, distinct points 140, 150 are detected from the images from the dock location and the area around 120, as illustrated in Figure 1a. This is done as early as possible in the docking operation to ensure that these points are visible as long as possible. This to achieve low uncertainty in the procedure for assisting the docking operation. The distinct points 140 of the dock location are further monitored relative to other distinct surrounding points 150 which appear in the flow of data from the at least one sensor 110.

In one embodiment, an operator can manually record a set of points 140 which provide good representation of the dock location and a set of points 150 which provide good representation of surrounding area 120.

In another embodiment, there may be an algorithm that automatically determines which points 140 are best suited to represent the dock location that the vessel 100 is to dock to and which points in the surrounding area should be included.

The registered points are saved and followed in a registration unit 200 throughout the docking operation, although they are no longer visible in the pictures from the cameras 110 in the final phase of the docking operation. If new points appear, showing new details of the dock location and area around that are important for the docking operation, the points can be added to already established points showing the dock location. This can be done either automatically or manually.

The relative position of the detected points on the dock location relative to surrounding 3D positioned points are reserved and tracked throughout the docking operation. Figure 1a visualizes this by displaying distinct 3D positioned points 140, 150 at the dock location and surrounding area 150.

First, the positions are calculated relative to the position of the sensors/cameras. Then, the positions are related to a geometric reference point on vessel 100 based on the relative position of the sensors/cameras to a geometric reference point on the vessel. In a third operation, relative position between points 140 and 150 is calculated. Each point 140 is related to at least one of the surrounding points 150. If at least one of the points 140 is visible also in the final phase of the docking operation, these points can also be used and related to the other points at the dock location which are not visible in the final phase. A vessel 100 will thus always have control of its own position relative to the dock location and can perform the docking operation in a safe manner although the points 140, or some of them, are not visible to the sensors on the vessel 100 in the final phase as illustrated in Figure 1b.

Operation 180 in Figure 2 describes the operations that belong to the final phase of the docking operation. That is, where the vessel is moved all the way to the dock location. All the registered distinct points are now used to establish an overview of where the dock location is relative to the vessel. The relative distances between all points 140 at the dock location and the surrounding distinct points 150 are accounted for. The visible surrounding distinct points 150 are related to the camera's position. Based on these points, the dock location relative to the vessel 100 can be estimated and the vessel 100 can safely dock even though the distinct points of the dock location are no longer visible in images from the cameras.

Figure 3 shows in an embodiment an overview of the system's units where sensors 110 are connected to a data processing unit 190. Sensors 110 may be any type of measurement devices capable of producing measurement data of distinct points from an area where they themselves are not located. Examples of such measurement devices are all types of cameras (optical, IR, UV), lasers, radar and passive RF.

From this it is understood that combinations of different sensors can be implemented in the solution according to the present invention.

In one embodiment, some of the sensors 110 may be of the type pan/tilt/zoom that can be controlled by the operator via a control and monitoring device or automatically. This may be flexible in relation to which side of the vessel is to be docked to the dock location. In the early phase of the docking operation, the vessel is oriented such that it is most appropriate to move the cameras in the forward direction, and then in a later stage of the docking operation, direct the cameras towards the side of the vessel when approaching the dock location.

In another embodiment, the sensors 110 are rotating. It provides sensing on both sides of the vessel 100 both for docking and for complete situational understanding of the surroundings.

In a third embodiment, the sensors 110 are placed in a circular formation or sector and have simultaneous coverage up to 360 degrees around the vessel 100. This can meet special needs related to fast vessel transfer or rapid environmental changes.

In a fourth embodiment, some of the sensors110 are stereometric cameras. In the data processing unit 190, the template from one of the two cameras associated with a stereometric camera can be applied to an image from the other camera to recover the distinct point. Triangulation is thus an important tool to help calculate the 3D position of the distinct point relative to the stereometric camera so that the process runs faster to reduce the uncertainty of an acceptable level.

Data from the sensors 110 are, in one embodiment of the data processing unit 190, collected, coordinated and processed using template matching, egomotion and odometry to produce distinct 3D positioned points. The data processing unit 110 can also, through connections, retrieve distinct points from registration and tracking devices to use them in data processing algorithms and return updated positions. The data processing unit 190 can also provide control commands back to the sensors from an operator or automatically. In many cases, it may also be sufficient to produce distinct 2D-positioned points, indicated as distance and bearing. For non-imaging sensors, distinct points can be established, for example, by sensors measuring bearing and/or distance to distinct points that can be used in triangulation algorithms. Examples of sensors can be laser, passive RF and pulse Doppler radar. For sensors that also measure relative speed between sensor and distinct points, speed measurements can also be included in data processing algorithms to help improve accuracy and quality.

Distinct points of the dock location and surrounding area 120 can, in one embodiment of data processing unit 190, be arranged automatically or by operator in two sets where the one set of distinct points is from dock location 140, and the second set of distinct points is from surrounding area 150.

The data processing unit 190 transmits distinct 3D positioned points two times to registration unit 200, the first set containing points of the dock location and the other set contains points from the surrounding area.

In registration unit 200, selected or all points from the first set and the second set are, in one embodiment, registered either manually or automatically relative to the sensors position.

In another embodiment, each of the points from the first set is also recorded relative to each of the points from the second set. This enables positioning of the vessel against the points from the first set, although they can not be registered in the final phase of the docking operation.

In a third embodiment, each of the points from the first set is only registered relative to each of the points from the second set, to minimize use of electronics thereby making the product less expensive.

Selection and registration can take place at an early stage of the docking operation, but it is also possible for an operator or automatically to contribute with new points during the docking operation. Selection criteria may in one embodiment of the invention be that the points must be within a certain range. In another embodiment, it may be that the operator/algorithm estimates that the points overlap with the dock's nature. An additional requirement may also be that the points must be observed at least a certain number of times after the first observation and/or that they must have been observed over at least a given period between the first and last observation.

In some cases, such as when a gangway bridge is to be docked from the vessel, it is sufficient to record the point that overlaps with the physical device at the dock location to be connected to the vessel, as in the said example, is the front end of the gangway bridge. In other cases, when the vessel is to dock its broadside to a dock, it may be necessary to overrepresent the wharfside with many points.

In another embodiment, allocation of processing between the data processing unit 190 and the registration unit 200, is performed by the registration unit 200 that is organizing distinct points in two sets where one set of distinct points is from the dock location and the second set of distinct points is from surrounding area 120. The additional step of selecting points from the two sets can then be avoided. This can for some situations be a rational way of doing it. Then, time and resources can be saved. Other situations may take advantage of the preliminary organization taking place in the data processing unit 190, and that a registration of selected distinct points is performed in the registration unit 200.

A first tracking unit 210 is connected to the registration unit 200 which is following the registered points from the first set of points from the dock location. A second tracking unit 220 is connected to the registration unit 200 which is following the registered points from the second set of points from the surrounding area. The tracking units 210 and 220 are also connected so that points followed by the tracking unit 210 can also be related to the following points in the second tracking unit 220. Additionally, both the tracking units 210, 220 are connected to the data processing unit 190 so that the data processing unit 190 can use the tracked registered points in data processing algorithms and update tracked points in the tracking devices.

In one embodiment, the registered points can be followed and updated in the first tracking unit 210 by, for example, using Kalman filter techniques and tables. Similarly, the registered points can be followed and updated in the second tracking unit 220.

A distance calculating unit 230 is connected to the first and second tracking units 210, 220. In one embodiment, distance from the vessel to each of the selected points from the first set of points 140 is calculated by using the position relative to the selected points in the second set of points 150 combined with the position of the points in the second set of points relative to the position of the sensors 110 by estimating relative displacement between the points in the second set.

In another embodiment, distance from vessel 100 to each of the selected points from the first set of points 140 is calculated using previous measurements for the points relative to the positions of the sensors 110. Since vessel 100 is moving over time, this also includes the use of the vessel's 100 measurements of its own position along its course 100 related to the positions of the sensors 110.

In a third embodiment, it is the selected points from the first set of points 140 related to the sensor positions that is used in conjunction with selected points from the second set of points 150. The displacement of the sensor 110 is estimated using the selected points in the second set of points 150. Based on this estimate, the position of the selected points in the first set of points 140 is corrected, although they can not be found in the data from the sensor in the final phase of the docking operation.

In a fourth embodiment, the techniques from the first, second and third embodiments are combined to achieve better accuracy.

The differential vectors between positions to selected points from the first and second sets of points 140, 150 are transferred to a third tracking unit 240. This can, in one embodiment, also store previous updates and has feedback to the distance calculating unit 230. In one embodiment, the distance calculating unit 230 can also estimate mean differential vectors based on the updates of the differential vectors stored in the third tracking unit 240. This can in many cases provide a more accurate distance estimation between the vessel and dock location than using last updates.

The present invention may also be used for other operations, such as when passing dangerous reefs and banks or other smaller vessels in those cases where data from these can be found from the sensors at close passages.

An evaluation unit 250 is connected to the tracking unit 240. This evaluates the quality of the tracked differential vectors in the third tracking unit 240 based on given criteria and has feedback to both the tracking unit 240 and the data processing unit 190. In one embodiment, the criteria may be that the differential vectors must not change more than a specified value for docking operations. However, there may be other change requirements related to other ways of evaluation in a general case, such as for instance upon passage of other vessels. If the criteria of the updates are not complied with, the differential vector can be removed from a tracking table in the third tracking unit 240 and/or that a surrounding area hereafter is not scanned/ updated by the data processing unit 190.

3D positioned points (possibly distance and bearing), video, distance to the dock location and associated information are, in an embodiment of the invention, transmitted to a monitoring and control device via a communication device.

A device for controlling and monitoring is in one embodiment aboard the vessel. An operator aboard the vessel can then manually operate the sensors.

In another embodiment, control and monitoring facilities are additionally at, or only at, the dock location and surrounding area. This also enables control of the vessel and docking operation for an operator who is not on board.

In a third embodiment, the control device is also located in locations other than the dock location and surrounding area. The communication device uses available communication technology so that information from the devices shown in Figure 3 can be transmitted to a remote location. This may, in a maritime application, permit the use of a pilot that may provide information about shipping lane to crews aboard a vessel so that safe maneuvering of the vessel can be performed. A pilot service can thus be centralized so that more vessels can get information from the same pilot. Several pilots can also stay at the same location where they can help each other in difficult situations. Especially in situations where the vessel passes through narrow channels with banks and dangerous underwater reefs. It may then provide increased safety when more pilots and professionals can contribute. Then it is important that the images transmitted give as complete coverage as possible.

The invention enables that 3D positioning information of the vessel relative to surrounding distinct 3D positioned points representing hazardous reefs/banks is available for a pilot even though they are not visible in the images. This may be due, for example, to the fact that the vessel in the final phase of the passage is very close to the objects and therefore not visible because they are below the field of view of the camera but have been visible to the camera in the previous phase of the passage operation.

In a fourth embodiment, the control and monitoring device is automated without a monitor for the operator. An autonomous docking of a vessel is then carried out to a dock location based on information and directives obtained from local traffic controllers or authorities. An ID can be given at a desired dock. It is then automatically looked up in a database for specific static information about the dock supplemented with dynamic information from own sensors (and possibly other real-time sensors), and based on this and docking position, a route will be added to dock the ship, and where the route and the docking operation is guided according to the system and the method of the invention thereby assisting in safe docking of the vessel.

Static information can be maps with information about the different parts of the map, information about the sailing fairway, information about beacons, radio beacon information about various points for optical/radar positioning and information about today's traffic. Dynamic information from one's own or other sensors can be the vessel's radar, the vessel's electro-optical sensors - VIS, IR, LRF, LADAR, radar and EO sensors of other vessels or EO sensor of vessels in the port/dock. Dock position from traffic controllers/authorities can be based on fixed dock, one or more alternative docks or on the current situation and/or an optimization.

## Claims

1. A system for assisting docking of a vessel (100), comprising:
- at least one sensor (110) arranged on the vessel (100) to provide measurement data of distinct points from a dock location and its surrounding area (120);
- a data processing unit (190) connected to the at least one sensor (110) for processing a first set of distinct points (140) at the dock location and a second set of distinct points (150) at the surrounding area (120), the first and second set of distinct points (140, 150) being represented by their 3D coordinates relative to the position of the sensor (110);
- a registration unit (200) connected to the data processing unit (190) registering at least one first point in the first set of distinct points (140) and at least one second point in the second set of distinct points (150);
- a first tracking unit (210) connected to the registration unit (200) tracking the registered at least one first point in the first set of distinct points (140);
- a second tracking unit (220) connected to the registration unit (200) tracking the registered at least one second point in the second set of distinct points (150),
**characterized in that**
- the first and second tracking units (210, 220) are connected to each other and the data processing unit (190), and when the registered and tracked at least one first point in the first set at distinct points (140) of the dock location no longer can be tracked in a final phase of the docking, the registered and tracked at least one first point in the first set of distinct points (140) is updated in the data processing unit (190), represented by 3D coordinates relative to the registered and tracked at least one second point in the second set of distinct points (150);
- a distance calculating unit (230) is connected to the first and second tracking units (210,220) which calculates the distance between the vessel (100) and the dock location by using updates of 3D coordinates of both sets of distinct points (140, 150) obtained from the first and second tracking units (210, 220).

2. The system according to claim 1, **characterized in** further comprising a third tracking unit (240) connected to said remote calculating unit (230) to maintain and track differential position vectors between updated points from the first and second tracking units (210, 220).

3. The system according to claim 2, **characterized in** further comprising an evaluation unit (250) connected to said third tracking unit (240) and said data processing unit (190) for evaluating the quality of differential position vectors and capable of providing messages to the third tracking unit (240) to remove tracked vectors, and to report to the data processing unit (190) to limit the focus area, if insufficient quality is achieved.

4. The system according to one of the previous claims,
**characterized in that** the at least one sensor (110) is a pan/tilt/zoom camera.

5. The system according to one of the previous claims,
**characterized in that** the at least one sensor (110) is a rotating sensor.

6. The system according to one of claims 1 to 3, **characterized in that** the at least one sensor (110) is a stereometric camera.

7. The system according to one of claims 1 to 3, **characterized in that** the at least one sensor (110) is arranged to detect events up to 360 degree viewing angle.

8. The system according to claim 7, **characterized in that** several sensors (110) are located in an circular formation to be able to detect events up to 360 degree viewing angle.

9. The system according to one of the preceding claims,
**characterized in that** it further comprises at least one communication device for transferring 3D coordinates of the at least one first point of the first set of distinct points (140) and the detected at least one second point in the second set of distinct points (150), as well as calculated distances and sensor data to a location for controlling and monitoring the docking operation.

10. The system according to claim 9, **characterized in that** the location for controlling and monitoring comprises a control and monitoring device for selectively displaying real-time video from the at least one camera and selectively displaying distinct 3D positioned points (140, 150) projected and highlighted on selected real-time video.

11. A method for assisting docking of a vessel (100) to a dock location, by:
- providing measurement data of distinct points at a dock location and its surrounding area using at least one sensor (110) arranged on the vessel (100);
- processing a first set of distinct points (140) at the dock location and a second set of distinct points (150) at the surrounding area (120) in a data processing unit (190) and representing the first and second sets of distinctive points (140, 150) by their 3D coordinates relative to the position of the sensor (110);
- registering at least one first point in the first set of distinct points (140) in a registration unit (200), connected to the data processing unit (190), and at least one second point in the second set of distinct points (150);
- tracking the registered at least one first point in the first set of distinct points (140) in a first tracking unit (210) connected to the registration unit (200);
- tracking the registered at least one second point in the second set of distinct points (150) in a second tracking unit (220) connected to the registration unit (200),
**characterized in that**
- when the registered and tracked at least one first point in the first set of distinct points (140) at the dock location no longer can be tracked in a final phase of the docking, updating, in the data processing unit (190), the registered and tracked at least one first point in the first set of distinct points (140) by their 3D coordinates relative to the registered and tracked at least one second point in the second set of distinct points (150), wherein the first and second tracking units (210, 220) are connected to each other and the data processing unit (190);
- calculate the distance between the vessel (100) and the dock location in a distance calculating unit (230) connected to the first and second tracking units (210, 220) by using 3D coordinate updates of both sets of distinct points (140, 150) obtained from the first and second tracking units (210, 220).

12. The method according to claim 11, **characterized in** keeping and tracking differential position vectors between updated points from the first and second tracking units (210, 220) in a third tracking unit (240) connected to said distance calculating unit (230).

13. The method according to claim 12, **characterized in** evaluating the quality of differential position vectors in an evaluation unit (250) connected to the third tracking unit (240) and the data processing unit (190), and providing instructions to the third tracking device (240) to remove the vectors tracked, and to provide messages to the data processing unit (190) to reduce the focus area, if insufficient quality is achieved.

14. The method according to any one of claims 11 to 13,
**characterized in** using a pan/tilt/zoom camera as the at least one sensor (110).

15. The method according to any one of claims 11 to 13,
**characterized in** using a rotating camera as the at least one sensor (110).

16. The method according to any one of claims 11 to 13,
**characterized in** using a stereometric camera as the at least one sensor (110).

17. The method according to any one of claims 11 to 16,
**characterized in** arranging the at least one sensor (110) such that it can detect events up to 360 degree viewing angle.

18. The method according to claim 17, **characterized in** arranging several sensors (100) such that they are located in circular formation to enable detecting events up to 360 degree viewing angle.

19. The method according to any one of claims 14 to 18,
**characterized in** transmitting 3D coordinates of the at least one first point in the first set of distinct points (140), and recorded at least one second point in the second set of distinct points (150), as well as calculated distances and sensor data, to a location for controlling and monitoring the docking operation, and where this is done by means of at least one communication device.

20. The method according to claim any of the claims 14 to 16,
**characterized in** selectively displaying real-time video from the camera on a control and monitoring device at a location for controlling and monitoring the docking operation, and selectively displaying the first and second sets of distinct points (140, 150) projected and highlighted on selected real-time video.

21. The method according to any one of claims 11 to 20,
**characterized in that** the at least one first and at least one second point of the first and second set of distinct points (140, 150) recorded in the recording unit (200) is performed by an operator.

22. The method according to any one of claims 11 to 21,
**characterized in** determining the distance between the vessel and the dock location by calculating differential vectors between updates of points from the first and second tracking units (210, 220) in combination with the estimated distance between the vessel and points from the second tracking unit (220).

23. The method according to any one of claims 11 to 21,
**characteri**z**ed in** determining the distance between the vessel and the dock location by calculating average differential vectors between vectors updates not removed in the third tracking unit (240) in combination with the estimated distance between the vessel and points from the second tracking unit (220).

24. The method according to any one of claims 11 to 23,
**characterized in** finding an improved distance estimation between the vessel and dock location by correcting 3D coordinates of the points from the tracking unit (210) based on estimation of displacement of the sensor (110) by using relative displacement between points from the second tracking unit (220) relative to each other.

25. The method according to any one of claims 11 to 24,
**characterized in** displaying distinct 3D positioned points showing reefs and banks with physical markings for these in addition to the first set of the distinctive points (140) from the dock location.

26. The method according to any one of claims 11 to 25,
**characterized in** performing autonomous docking of a vessel to a dock location based on calculated distance measurements as well as information and directives obtained from local traffic controllers or authorities, and where this is performed in the control and monitoring device.

## Patentansprüche

1. System zum Unterstützen des Andockens eines Schiffs (100), umfassend:
wenigstens einen auf dem Schiff (100) angeordneten Sensor (110) zum Liefern von Messdaten von verschiedenen Punkten von einer Dockposition und deren Umgebungsbereich (120);
eine mit dem wenigstens einen Sensor (110) verbundene Datenverarbeitungseinheit (190) zum Verarbeiten einer ersten Menge von verschiedenen Punkten (140) an der Dockposition und einer zweiten Menge von verschiedenen Punkten (150) im Umgebungsbereich (120), wobei erste und zweite Menge von verschiedenen Punkten (140, 150) durch ihre 3D-Koordinaten in Bezug auf die Position des Sensors (110) dargestellt sind;
eine mit der Datenverarbeitungseinheit (190) verbundene Registrierungseinheit (200) zum Registrieren von wenigstens einem ersten Punkt in der ersten Menge von verschiedenen Punkten (140) und wenigstens einem zweiten Punkt in der zweiten Menge von verschiedenen Punkten (150);
eine mit der Registrierungseinheit (200) verbundene erste Verfolgungseinheit (210) zum Verfolgen des registrierten wenigstens einen ersten Punkts in der ersten Menge von verschiedenen Punkten (140);
eine mit der Registrierungseinheit (200) verbundene zweite Verfolgungseinheit (220) zum Verfolgen des registrierten wenigstens einen zweiten Punkts in der zweiten Menge von verschiedenen Punkten (150),
**dadurch gekennzeichnet, dass**
erste und zweite Verfolgungseinheit (210, 220) miteinander und mit der Datenverarbeitungseinheit (190) verbunden sind und, wenn der registrierte und verfolgte wenigstens eine erste Punkt in der ersten Menge von verschiedenen Punkten (140) der Dockposition nicht mehr in einer Schlussphase des Andockens verfolgt werden kann, der registrierte und verfolgte wenigstens eine erste Punkt in der ersten Menge von verschiedenen Punkten (140) in der Datenverarbeitungseinheit (190), dargestellt durch 3D-Koordinaten in Bezug auf den registrierten und verfolgten wenigstens einen zweiten Punkt in der zweiten Menge von verschiedenen Punkten (150), aktualisiert wird;
eine Abstandsberechnungseinheit (230) mit der ersten und zweiten Verfolgungseinheit (210, 220) verbunden ist, die den Abstand zwischen dem Schiff (100) und der Dockposition durch Verwenden von Aktualisierungen von 3D-Koordinaten von beiden Mengen von verschiedenen Punkten (140, 150) erhalten von erster und zweiten Verfolgungseinheit (210, 220), berechnet.

2. System nach Anspruch 1, **dadurch gekennzeichnet, dass** es ferner eine mit der Fernberechnungseinheit (230) verbundene dritte Verfolgungseinheit (240) zum Halten und Verfolgen von Differentialpositionsvektoren zwischen aktualisierten Punkten von erster und zweiter Verfolgungseinheit (210, 220) umfasst.

3. System nach Anspruch 2, **dadurch gekennzeichnet, dass** es ferner eine mit der dritten Verfolgungseinheit (240) und der Datenverarbeitungseinheit (190) verbundene Evaluierungseinheit (250) zum Evaluieren der Qualität von Differentialpositionsvektoren umfasst, die zum Liefern von Nachrichten an die dritte Verfolgungseinheit (240) zum Entfernen von verfolgten Vektoren und zum Melden an die Datenverarbeitungseinheit (190) zum Begrenzen des Fokusbereichs, wenn eine unzureichende Qualität erzielt wird, fähig ist.

4. System nach einem der vorhergehenden Ansprüche, **dadurch gekennzeichnet, dass** der wenigstens eine Sensor (110) eine Schwenk-/Kipp-/Zoomkamera ist.

5. System nach einem der vorhergehenden Ansprüche, **dadurch gekennzeichnet, dass** der wenigstens eine Sensor (110) ein Drehsensor ist.

6. System nach einem Ansprüche 1 bis 3, **dadurch gekennzeichnet, dass** der wenigstens eine Sensor (110) eine stereometrische Kamera ist.

7. System nach einem Ansprüche 1 bis 3, **dadurch gekennzeichnet, dass** der wenigstens eine Sensor (110) zum Erfassen von Ereignissen bis zu einem Sehwinkel von 360 Grad angeordnet ist.

8. System nach Anspruch 7, **dadurch gekennzeichnet, dass** mehrere Sensoren (110) in einer kreisförmigen Formation angeordnet sind, um Ereignisse bis zu einem Sehwinkel von 360 Grad erfassen zu können.

9. System nach einem der vorhergehenden Ansprüche, **dadurch gekennzeichnet, dass** es ferner eine Kommunikationsvorrichtung zum Übertragen von 3D-Koordinaten des wenigstens einen ersten Punkts der ersten Menge von verschiedenen Punkten (140) und des erfassten wenigstens einen zweiten Punkts in der zweiten Menge von verschiedenen Punkten (150) sowie von berechneten Abständen und Sensordaten an eine Position zum Steuern und Überwachen des Andockvorgangs umfasst.

10. System nach Anspruch 9, **dadurch gekennzeichnet, dass** die Position zum Steuern und Überwachen eine Steuer- und Überwachungsvorrichtung zum selektiven Anzeigen von Echtzeitvideo von der wenigstens einen Kamera und selektiven Anzeigen von verschiedenen 3D-positionierten Punkten (140, 150), projiziert und hervorgehoben in ausgewähltem Echtzeitvideo, umfasst.

11. Verfahren zum Unterstützen des Andockens eines Schiffes (100) an einer Dockposition, umfassend:
Liefern von Messdaten von verschiedenen Punkten an einer Dockposition und deren Umgebungsbereich unter Verwendung von einem wenigstens einen auf dem Schiff (100) angeordneten Sensor (110);
Verarbeiten einer ersten Menge von verschiedenen Punkten (140) an der Dockposition und einer zweiten Menge von verschiedenen Punkten (150) im Umgebungsbereich (120) in einer Datenverarbeitungseinheit (190) und Darstellen der ersten und zweiten Menge von verschiedenen Punkten (140, 150) durch ihre 3D-Koordinaten in Bezug auf die Position des Sensors (110);
Registrieren von wenigstens einem ersten Punkt in der ersten Menge von verschiedenen Punkten (140) in einer Registrierungseinheit (200), verbunden mit der Datenverarbeitungseinheit (190), und wenigstens einem zweiten Punkt in der zweiten Menge von verschiedenen Punkten (150);
Verfolgen des registrierten wenigstens einen ersten Punkts in der ersten Menge von verschiedenen Punkten (140) in einer mit der Registrierungseinheit (200) verbundenen ersten Verfolgungseinheit (210);
Verfolgen des registrierten wenigstens einen zweiten Punkts in der zweiten Menge von verschiedenen Punkten (150) in einer mit der Registrierungseinheit (200) verbundenen zweiten Verfolgungseinheit (220),
**gekennzeichnet durch,**
wenn der registrierte und verfolgte wenigstens eine erste Punkt in der ersten Menge von verschiedenen Punkten (140) an der Dockposition nicht mehr in einer Schlussphase des Andockens verfolgt werden kann, Aktualisieren des registrierten und verfolgten wenigstens einen ersten Punkts in der ersten Menge von verschiedenen Punkten (140) **durch** ihre 3D-Koordinaten in Bezug auf den registrierten und verfolgten wenigstens einen zweiten Punkt in der zweiten Menge von verschiedenen Punkten (150) in der Datenverarbeitungseinheit (190), wobei erste und zweite Verfolgungseinheit (210, 220) miteinander und mit der Datenverarbeitungseinheit (190) verbunden sind;
Berechnen des Abstands zwischen dem Schiff (100) und der Dockposition in einer mit erster und zweiter Verfolgungseinheit (210, 220) verbundenen Abstandsberechnungseinheit (230) durch Verwenden von 3D-Koordinaten-Aktualisierungen von beiden Mengen von verschiedenen Punkten (140, 150), erhalten von erster und zweiter Verfolgungseinheit (210, 220).

12. Verfahren nach Anspruch 11, **gekennzeichnet durch** Halten und Verfolgen von Differentialpositionsvektoren zwischen aktualisierten Punkten von erster und zweiter Verfolgungseinheit (210, 220) in einer mit der Abstandsberechnungseinheit (230) verbundenen dritten Verfolgungseinheit (240).

13. Verfahren nach Anspruch 12, **gekennzeichnet durch** Evaluieren der Qualität von Differentialpositionsvektoren in einer mit der dritten Verfolgungseinheit (240) und der Datenverarbeitungseinheit (190) verbundenen Evaluierungseinheit (250) und Liefern von Anweisungen an die dritte Verfolgungsvorrichtung (240) zum Entfernen der verfolgten Vektoren und zum Liefern von Nachrichten an die Datenverarbeitungseinheit (190) zum Reduzieren des Fokusbereichs, wenn eine unzureichende Qualität erzielt wird.

14. Verfahren nach einem der Ansprüche 11 bis 13, **gekennzeichnet durch** Verwenden einer Schwenk-/Kipp-Zoomkamera als den wenigstens einen Sensor (110).

15. Verfahren nach einem der Ansprüche 11 bis 13, **gekennzeichnet durch** Verwenden einer Drehkamera als den wenigstens einen Sensor (110).

16. Verfahren nach einem der Ansprüche 11 bis 13, **gekennzeichnet durch** Verwenden einer stereometrischen Kamera als den wenigstens einen Sensor (110).

17. Verfahren nach einem der Ansprüche 11 bis 16, **gekennzeichnet durch** Anordnen des wenigstens einen Sensors (110), so dass er Ereignisse bis zu einem Sehwinkel von 360 Grad erfassen kann.

18. Verfahren nach Anspruch 17, **gekennzeichnet durch** Anordnen von mehreren Sensoren (100), so dass sie in kreisförmiger Formation angeordnet sind, um das Erfassen von Ereignissen bis zu einem Sehwinkel von 360 Grad zu ermöglichen.

19. Verfahren nach einem der Ansprüche 14 bis 18, **gekennzeichnet durch** Übertragen von 3D-Koordinaten des wenigstens einen ersten Punkts in der ersten Menge von verschiedenen Punkten (140) und Aufzeichnen des wenigstens einen zweiten Punkts in der zweiten Menge von verschiedenen Punkten (150) sowie von berechneten Abständen und Sensordaten an eine Position zum Steuern und Überwachen des Andockvorgangs, und wo dies erfolgt, **durch** wenigstens eine Kommunikationsvorrichtung.

20. Verfahren nach einem der Ansprüche 14 bis 16, **gekennzeichnet durch** selektives Anzeigen von Echtzeitvideo von der Kamera an einer Steuer- und Überwachungsvorrichtung an einer Position zum Steuern und Überwachen des Andockvorgangs und selektives Anzeigen der ersten und zweiten Menge von verschiedenen Punkten (140, 150), projiziert und hervorgehoben in ausgewähltem Echtzeitvideo.

21. Verfahren nach einem der Ansprüche 11 bis 20, **dadurch gekennzeichnet, dass** der wenigstens erste und wenigstens eine zweite Punkt der ersten und zweiten Menge von verschiedenen Punkten (140, 150), aufgezeichnet in der Aufzeichnungseinheit (200), durch einen Bediener ausgeführt werden.

22. Verfahren nach einem der Ansprüche 11 bis 21, **gekennzeichnet durch** Bestimmen des Abstands zwischen dem Schiff und der Dockposition **durch** Berechnen von Differentialvektoren zwischen Aktualisierungen von Punkten von der ersten und zweiten Verfolgungseinheit (210, 220) in Kombination mit dem geschätzten Abstand zwischen dem Schiff und Punkten von der zweiten Verfolgungseinheit (220).

23. Verfahren nach einem der Ansprüche 11 bis 21, **gekennzeichnet durch** Bestimmen des Abstands zwischen dem Schiff und der Dockposition **durch** Berechnen von Durchschnittsdifferentialvektoren zwischen in der dritten Verfolgungseinheit (240) nicht entfernen Vektoraktualisierungen in Kombination mit dem geschätzten Abstand zwischen dem Schiff und Punkten von der zweiten Verfolgungseinheit (220).

24. Verfahren nach einem der Ansprüche 11 bis 23, **gekennzeichnet durch** Finden einer verbesserten Abstandsschätzung zwischen dem Schiff und der Dockposition **durch** Korrigieren von 3D-Koordinaten der Punkte von der Verfolgungseinheit (210) auf Basis einer Schätzung der Verschiebung des Sensors (110) **durch** Verwenden der relativen Verschiebung zwischen Punkten von der zweiten Verfolgungseinheit (220) in Bezug zueinander.

25. Verfahren nach einem der Ansprüche 11 bis 24, **gekennzeichnet durch** Anzeigen von verschiedenen 3D-positionierten Punkten zum Darstellen von Riffen und Bänken mit physischen Markierungen für diese zusätzlich zur ersten Menge der charakteristischen Punkte (140) von der Dockposition.

26. Verfahren nach einem der Ansprüche 11 bis 25, **gekennzeichnet durch** selbstständiges Andocken eines Schiffs an einer Dockposition auf Basis von berechneten Abstandsmessungen sowie Informationen und Richtlinien, erhalten von Verkehrsleitern oder Behörden vor Ort, und wo dies in der Steuer- und Überwachungsvorrichtung erfolgt.

## Revendications

1. Système pour aider à l'amarrage d'un navire (100), comprenant :
- au moins un capteur (110) agencé sur le navire (100) pour fournir des données de mesure de points distincts à partir d'un emplacement d'amarrage et de sa zone environnante (120) ;
- une unité de traitement de données (190) connectée à l'au moins un capteur (110) pour traiter un premier ensemble de points distincts (140) au niveau de l'emplacement d'amarrage et un deuxième ensemble de points distincts (150) au niveau de la zone environnante (120), les premier et deuxième ensembles de points distincts (140, 150) étant représentés par leurs coordonnées 3D par rapport à la position du capteur (110) ;
- une unité d'enregistrement (200) connectée à l'unité de traitement de données (190) enregistrant au moins un premier point dans le premier ensemble de points distincts (140) et au moins un deuxième point dans le deuxième ensemble de points distincts (150) ;
- une première unité de suivi (210) connectée à l'unité d'enregistrement (200) suivant l'au moins un premier point enregistré dans le premier ensemble de points distincts (140) ;
- une deuxième unité de suivi (220) connectée à l'unité d'enregistrement (200) suivant l'au moins un deuxième point enregistré dans le deuxième ensemble de points distincts (150),
**caractérisé en ce que**
- les première et deuxième unités de suivi (210, 220) sont connectées l'une à l'autre et à l'unité de traitement de données (190), et lorsque l'au moins un premier point enregistré et suivi dans le premier ensemble au niveau de points distincts (140) de l'emplacement d'amarrage ne peut plus être suivi dans une phase finale de l'amarrage, l'au moins un premier point enregistré et suivi dans le premier ensemble de points distincts (140) est mis à jour dans l'unité de traitement de données (190), représenté par des coordonnées 3D par rapport à l'au moins un deuxième point enregistré et suivi dans le deuxième ensemble de points distincts (150) ;
- une unité de calcul de distance (230) est connectée aux première et deuxième unités de suivi (210, 220) qui calcule la distance entre le navire (100) et l'emplacement d'amarrage au moyen de mises à jour de coordonnées 3D des deux ensembles de points distincts (140, 150) obtenus des première et deuxième unités de suivi (210, 220).

2. Système selon la revendication 1, **caractérisé en ce qu'**il comprend en outre une troisième unité de suivi (240) connectée à ladite unité de calcul distante (230) pour maintenir et suivre les vecteurs de position différentiels entre les points mis à jour à partir des première et deuxième unités de suivi (210, 220).

3. Système selon la revendication 2, **caractérisé en ce qu'**il comprend en outre une unité d'évaluation (250) connectée à ladite troisième unité de suivi (240) et ladite unité de traitement de données (190) pour évaluer la qualité de vecteurs de position différentiels et capables de fournir des messages à la troisième unité de suivi (240) pour retirer les vecteurs suivis, et pour signaler à l'unité de traitement de données (190) de limiter la zone de mise au point, si une qualité insuffisante est atteinte.

4. Système selon l'une quelconque des revendications précédentes,
**caractérisé en ce que** l'au moins un capteur (110) est une caméra pan/tilt/zoom.

5. Système selon l'une quelconque des revendications précédentes,
**caractérisé en ce que** l'au moins un capteur (110) est un capteur rotatif.

6. Système selon l'une quelconque des revendications 1 à 3, **caractérisé en ce que** l'au moins un capteur (110) est une caméra stéréométrique.

7. Système selon l'une quelconque des revendications 1 à 3, **caractérisé en ce que** l'au moins un capteur (110) est agencé pour détecter des événements jusqu'à un angle d'observation de 360 degrés.

8. Système selon la revendication 7, **caractérisé en ce que** plusieurs capteurs (110) sont situés en une formation circulaire pour être capables de détecter des événements jusqu'à un angle d'observation de 360 degrés.

9. Système selon l'une quelconque des revendications précédentes,
**caractérisé en ce qu'**il comprend en outre au moins un dispositif de communication pour transférer les coordonnées 3D de l'au moins un premier point du premier ensemble de points distincts (140) et de l'au moins un deuxième point détecté dans le deuxième ensemble de points distincts (150), ainsi que les distances calculées et les données de capteur à un emplacement pour commander et surveiller l'opération d'amarrage.

10. Système selon la revendication 9, **caractérisé en ce que** l'emplacement pour la commande et la surveillance comprend un dispositif de commande et de surveillance pour afficher de manière sélective une vidéo en temps réel à partir de l'au moins une caméra et afficher de manière sélective les points positionnés 3D distincts (140, 150) projetés et mis en évidence sur une vidéo en temps réel sélectionnée.

11. Procédé pour aider à l'amarrage d'un navire (100) à un emplacement d'amarrage, par :
- fourniture des données de mesure de points distincts au niveau d'un emplacement d'amarrage et de sa zone environnante au moyen d'au moins un capteur (110) agencé sur le navire (100) ;
- traitement d'un premier ensemble de points distincts (140) au niveau de l'emplacement d'amarrage et d'un deuxième ensemble de points distincts (150) au niveau de la zone environnante (120) dans une unité de traitement de données (190) et représentation des premier et deuxième ensembles de points distinctifs (140, 150) par leurs coordonnées 3D par rapport à la position du capteur (110) ;
- enregistrement d'au moins un premier point dans le premier ensemble de points distincts (140) dans une unité d'enregistrement (200), connectée à l'unité de traitement de données (190), et d'au moins un deuxième point dans le deuxième ensemble de points distincts (150) ;
- suivi de l'au moins un premier point enregistré dans le premier ensemble de points distincts (140) dans une première unité de suivi (210) connectée à l'unité d'enregistrement (200) ;
- suivi de l'au moins un deuxième point enregistré dans le deuxième ensemble de points distincts (150) dans une deuxième unité de suivi (220) connectée à l'unité d'enregistrement (200),
**caractérisé en ce que**
- lorsque l'au moins un premier point enregistré et suivi dans le premier ensemble de points distincts (140) au niveau de l'emplacement d'amarrage ne peut plus être suivi dans une phase finale de l'amarrage, mise à jour, dans l'unité de traitement de données (190), de l'au moins un premier point enregistré et suivi dans le premier ensemble de points distincts (140) par leurs coordonnées 3D par rapport à l'au moins un deuxième point enregistré et suivi dans le deuxième ensemble de points distincts (150), dans lequel les première et deuxième unités de suivi (210, 220) sont connectées l'une à l'autre et à l'unité de traitement de données (190) ;
- calcul de la distance entre le navire (100) et l'emplacement d'amarrage dans une unité de calcul de distance (230) connectée aux première et deuxième unités de suivi (210, 220) au moyen de mises à jour de coordonnées 3D des deux ensembles de points distincts (140, 150) obtenus des première et deuxième unités de suivi (210, 220).

12. Procédé selon la revendication 11, **caractérisé par** le maintien et le suivi des vecteurs de position différentiels entre les points mis à jour à partir des première et deuxième unités de suivi (210, 220) dans une troisième unité de suivi (240) connectée à ladite unité de calcul de distance (230).

13. Procédé selon la revendication 12, **caractérisé par** l'évaluation de la qualité de vecteurs de position différentiels dans une unité d'évaluation (250) connectée à la troisième unité de suivi (240) et à l'unité de traitement de données (190), et la fourniture d'instructions au troisième dispositif de suivi (240) pour retirer les vecteurs suivis, et pour fournir des messages à l'unité de traitement de données (190) pour réduire la zone de mise au point, si une qualité insuffisante est atteinte.

14. Procédé selon l'une quelconque des revendications 11 à 13,
**caractérisé par** l'utilisation d'une caméra pan/tilt/zoom en tant que l'au moins un capteur (110).

15. Procédé selon l'une quelconque des revendications 11 à 13,
**caractérisé par** l'utilisation d'une caméra rotative en tant que l'au moins un capteur (110).

16. Procédé selon l'une quelconque des revendications 11 à 13,
**caractérisé par** l'utilisation d'une caméra stéréométrique en tant que l'au moins un capteur (110).

17. Procédé selon l'une quelconque des revendications 11 à 16,
**caractérisé par** l'agencement de l'au moins un capteur (110) de telle sorte qu'il peut détecter des événements jusqu'à un angle d'observation de 360 degrés.

18. Procédé selon la revendication 17, **caractérisé par** l'agencement de plusieurs capteurs (100) de telle sorte qu'ils sont situés en une formation circulaire pour permettre la détection d'événements jusqu'à un angle d'observation de 360 degrés.

19. Procédé selon l'une quelconque des revendications 14 à 18,
**caractérisé par** la transmission des coordonnées 3D de l'au moins un premier point dans le premier ensemble de points distincts (140), et de l'au moins un deuxième point enregistré dans le deuxième ensemble de points distincts (150), ainsi que des distances calculées et des données de capteur, à un emplacement pour commander et surveiller l'opération d'amarrage, et dans lequel ceci est réalisé au moyen d'au moins un dispositif de communication.

20. Procédé selon l'une quelconque des revendications 14 à 16,
**caractérisé par** l'affichage sélectif d'une vidéo en temps réel à partir de la caméra sur un dispositif de commande et de surveillance au niveau d'un emplacement pour commander et surveiller l'opération d'amarrage, et l'affichage sélectif des premier et deuxième ensembles de points distincts (140, 150) projetés et mis en évidence sur une vidéo en temps réel sélectionnée.

21. Procédé selon l'une quelconque des revendications 11 à 20,
**caractérisé en ce que** l'au moins un premier et au moins un deuxième point des premier et deuxième ensembles de points distincts (140, 150) enregistrés dans l'unité d'enregistrement (200) est réalisé par un opérateur.

22. Procédé selon l'une quelconque des revendications 11 à 21,
**caractérisé par** la détermination de la distance entre le navire et l'emplacement d'amarrage par calcul des vecteurs différentiels entre les mises à jour des points à partir des première et deuxième unités de suivi (210, 220) en combinaison avec la distance estimée entre le navire et les points à partir de la deuxième unité de suivi (220).

23. Procédé selon l'une quelconque des revendications 11 à 21,
**caractérisé par** la détermination de la distance entre le navire et l'emplacement d'amarrage par calcul de vecteurs différentiels moyens entre les mises à jour de vecteurs non retirés dans la troisième unité de suivi (240) en combinaison avec la distance estimée entre le navire et les points à partir de la deuxième unité de suivi (220).

24. Procédé selon l'une quelconque des revendications 11 à 23,
**caractérisé par** le fait de trouver une estimation de distance améliorée entre le navire et l'emplacement d'amarrage par correction des coordonnées 3D des points à partir de l'unité de suivi (210) sur la base de l'estimation de déplacement du capteur (110) au moyen d'un déplacement relatif entre les points à partir de la deuxième unité de suivi (220) les uns par rapport aux autres.

25. Procédé selon l'une quelconque des revendications 11 à 24,
**caractérisé par** l'affichage de points positionnés 3D distincts montrant les récifs et les bancs avec des marquages physiques pour ceux-ci en plus du premier ensemble des points distinctifs (140) à partir de l'emplacement d'amarrage.

26. Procédé selon l'une quelconque des revendications 11 à 25,
**caractérisé par** la réalisation d'un amarrage autonome d'un navire à un emplacement d'amarrage sur la base des mesures de distance calculées ainsi que des informations et directives obtenues des contrôleurs de circulation locale ou des autorités, et dans lequel ceci est réalisé par le dispositif de commande et de surveillance.
